# FASCICULE DE BREVET EUROPEEN

(11) **EP 1 086 568 B1**
(45) Date de publication et mention de la délivrance du brevet: **15.01.2003**
(21) Numéro de dépôt: 98922567.7
(22) Date de dépôt: 09.06.1998
(51) Int. Cl.: H04M 3/50

(54) **PROCEDE DE GESTION D'UN SERVICE DE RENSEIGNEMENT TELEPHONIQUE AUTOMATISE ET SYSTEME DE RENSEIGNEMENT AUTOMATIQUE ADAPTE**
FUNKTIONSWEISE UND GERÄT EINES AUTOMATISCHEN TELEFONAUSKUNFTSDIENSTES
METHOD FOR MANAGING AN AUTOMATIC TELEPHONE INFORMATION SERVICE AND ADAPTED AUTOMATIC INFORMATION SYSTEM

(43) Date de publication de la demande: 28.03.2001
(73) Titulaire: Swisscom AG, 3000 Bern 29 (CH)
(72) Inventeur: VAN KOMMER, Robert, CH-1752 Villars-sur-Glâne (CH)
(74) Mandataire: BOVARD AG - Patentanwälte
(86) Numéro de dépôt international: CH9800247
(87) Numéro de publication internationale: WO99065215

(56) Documents cités:
- WO-A-89/00793
- WO-A-95/14360
- WO-A-97/24862
- WO-A-98/16048
- CA-A- 2 091 658
- US-A- 5 165 095
- US-A- 5 689 547
- US-A- 5 732 187
- KELLNER A ET AL: "PADIS - An automatic telephone switchboard and directory information system" SPEECH COMMUNICATION, vol. 23, no. 1-2, octobre 1997, page 95-111 XP004117212
- WESTALL F A ET AL: "SPEECH TECHNOLOGY FOR TELECOMMUNICATIONS" BT TECHNOLOGY JOURNAL, vol. 14, no. 1, 1 janvier 1996, pages 9-27, XP000554636

## Description

La présente invention concerne un procédé de gestion d'un service de renseignement téléphonique automatisé. La présente invention concerne également un système de renseignement automatique adapté.

Différentes solutions ont été proposées dans l'art antérieur pour simplifier la sélection d'abonné dans un réseau téléphonique public commuté. Des annuaires téléphoniques permettent de déterminer un numéro de téléphone à partir du nom ou d'autres éléments d'identification de l'abonné demandé. A côté des annuaires sur papier, chers à produire et peu pratiques à manipuler, on connaît aussi des annuaires électroniques, disponibles notamment sur CD-ROMS. Ces produits peuvent difficilement être intégrés dans les dispositifs d'équipement terminal, notamment dans les combinés téléphoniques toujours plus miniaturisés ; en outre, il est difficile de les maintenir à jour. On utilise donc également des annuaires électroniques mémorisés dans un serveur en un point central du réseau et gérés de préférence par l'opérateur de réseau. Cet annuaire peut être consulté par n'importe quel abonné à partir de n'importe quel point du réseau, en établissant une liaison téléphonique avec le serveur. Le service de renseignements téléphoniques constitue un annuaire de ce type et constitue une solution confortable pour permettre aux usagers d'obtenir des numéros de téléphone actualisés. Ce service permet en effet d'obtenir des renseignements simplement en indiquant oralement le nom, ou d'autres éléments d'identification, de l'abonné demandé. Les renseignements sont donc accessibles à tous les usagers, sans nécessiter d'appareils spécifiques ou d'apprentissage fastidieux. Pour ces raisons, le service de renseignements téléphoniques constitue dans beaucoup de pays le service téléphonique vocal le plus souvent sollicité. En Allemagne, ce service doit par exemple faire face à 500 millions de requêtes annuelles ; aux Etats-Unis, ce sont 7 milliards d'appels qui sont traités chaque année.

Les coûts opérationnels de ces services sont directement liés au nombre d'agents employés pour répondre aux demandes de renseignements. Il y a donc un besoin reconnu de longue date pour automatiser, au moins partiellement, l'accès aux renseignements et éviter les coûts humains sans dégrader la qualité du service perçue par les utilisateurs.

Les services de renseignements actuels utilisent le plus souvent des solutions semi-automatisées. Seul le traitement des requêtes des appelants et la recherche de renseignements sont effectués au moyen de systèmes de banques de données évolués ; en revanche, tout le dialogue avec l'appelant est encore assuré par un agent humain. Pour l'opérateur, ces services restent donc coûteux à gérer. Il existe par conséquent un besoin reconnu de longue date pour des systèmes plus perfectionnés, permettant d'automatiser aussi bien l'analyse des requêtes des appelants, la recherche selon les critères requis et le dialogue avec l'appelant.

La demande de brevet W094/14270 décrit un système visant à résoudre ce problème. Les requêtes des utilisateurs d'un service de renseignement sont analysées grâce à un système d'analyse de parole, et les réponses générées par un système de synthèse de parole. L'usager est prié d'indiquer tout d'abord la localité désirée, puis le nom de l'abonné demandé. Les requêtes orales de l'usager sont numérisées puis analysées par le dispositif d'analyse de parole. Si la localité et le nom identifiés correspondent avec un degré de confiance prédéterminé à un abonné enregistré dans un répertoire d'abonnés, le numéro de téléphone de cet abonné est communiqué à l'appelant au moyen du synthétiseur de parole ; dans le cas contraire, l'appelant est prié d'épeler la localité et/ou le nom de l'abonné demandé.

Ce système ne permet pas à l'utilisateur de s'exprimer de manière naturelle, mais exige au contraire des réponses précises aux questions posées. Une réponse du type « ah... euh... je crois que ... la personne habite à ...euh... Berne » restera le plus souvent incomprise. En outre, étant donné les différences de prononciation et les nombreux noms à consonances similaires, seul un pourcentage insuffisant des requêtes peut être analysé correctement avec un tel système. Chaque question du système possède en effet des milliers voire des centaines de milliers de réponses possibles, par exemple des milliers de noms de localité différents, qui peuvent chacun être prononcés de différentes manières par les différents utilisateurs. Ce système ne permet donc pas d'analyser avec un niveau de confiance élevé les requêtes des utilisateurs. En cas de requête non comprise, l'utilisateur est donc tenu d'épeler le nom demandé, ce qui est peu confortable, ou de faire appel à un opérateur manuel, ce qui est coûteux. La demande de brevet WO89/00793 décrit un système analogue qui souffre d'inconvénients similaires.

Une autre solution est décrite dans le brevet canadien No. 2091658. Cette solution décrit un service de renseignements au moins en partie automatique dans un réseau téléphonique public. Selon la théorie de D1 cela est atteint du fait que le système contient une banque de données avec les numéros des abonnés et des informations mémorisées et attribuées aux abonnés individuels. Une unité de reconnaissance de parole essaie de reconnaître dans une requête téléphonique d'un appelant des mots-clés d'après lesquels elle cherche dans la banque de données un ensemble de données. Cette unité attribue à des mots-clés une probabilité que l'ensemble de données retrouvé correspond vraiment à l'objet de la requête. L'appelant possède un profil d'appelant qui lui est attribué et mémorisé. Ce profil d'appelant peut par exemple contenir des données statistiques, géographiques ou d'autres données concernant l'appelant. Ces indications aident le système à rechercher l'ensemble de données recherché. Notamment les probabilités susmentionnées sont calculées de cette façon.

La solution divulguée dans le brevet canadien No. 2091658 et présentée avec la probabilité de réussite susmentionnée ne suffit pas toujours pour obtenir une réponse correcte du système. Les défauts déjà mentionnés plus haut peuvent également être rencontrés dans le brevet canadien No. 2091658.

A côté de ces solutions de type annuaire automatique, on connaît également des assistants personnels qui permettent notamment à un utilisateur de simplifier la sélection d'abonnés souvent demandés. Ces assistants personnels comportent fréquemment une banque de donnée avec un répertoire d'abonnés importants, par exemple un répertoire personnel de 50 ou 100 abonnés. Selon le système, ce répertoire peut être mémorisé soit dans l'équipement d'usager, soit dans une banque de données centralisée gérée par l'opérateur de réseau de télécommunication. La sélection d'un abonné dans ce répertoire peut être faite par exemple en appuyant sur une touche dédiée, ou dans certains systèmes plus évolués au moyen d'un système de reconnaissance de parole. Certains systèmes emploient à cet effet des algorithmes de reconnaissance de parole mettant en oeuvre des modèles de voix dépendant de l'utilisateur. Ces systèmes parviennent à des taux de reconnaissance élevés à l'intérieur du répertoire personnel limité à disposition. En effet, le nombre de réponses possibles est très réduit (par exemple 50 ou 100) et le système connaît parfaitement les paramètres de la voix de l'utilisateur. Les assistants personnels ne permettent toutefois généralement pas de faciliter la sélection d'abonnés non répertoriés, par exemple la sélection d'abonnés demandés pour la première fois. En outre, la gestion du répertoire d'abonnés est souvent fastidieuse pour l'utilisateur, notamment en cas de changements d'adresses ou de numéros de téléphone. Les brevets US5719921 et US5369685 par exemple décrivent des assistants personnels de ce type.

Le brevet US5165095 décrit une méthode permettant d'établir une connexion téléphonique au moyen d'une commande vocale. La commande vocale est reconnue en utilisant des modèles de voix indépendants de l'appelant pour une portion standardisée de la commande - par exemple pour un ordre de type « CALL » et des modèles de voix dépendants de l'appelant pour la partie non standardisée - par exemple « Uncle Joe ». Chaque abonné s'inscrit au système en fournissant un répertoire personnel contenant une liste d'abonnés importants ainsi que les numéros de téléphone de ces abonnés, et en apprenant au système la prononciation choisie pour appeler cet abonné. Ce système ne permet toutefois pas d'établir une connexion par commande vocale avec un inconnu absent de son répertoire personnel.

Le brevet US5509049 décrit un service permettant d'établir une connexion avec un abonné simplement en épelant son numéro de téléphone, par exemple au moyen d'une commande vocale du type « DIAL 0-3-1-3-3-5-2-0-0-0 ». Il est cependant nécessaire de connaître le numéro de téléphone de l'abonné demandé pour utiliser ce service.

Un but de la présente invention est donc de proposer une méthode et un système de gestion d'un service de renseignement téléphonique automatisé dans un réseau téléphonique public qui évite les inconvénients des procédés et des systèmes de l'art antérieur. En particulier, un but de la présente invention est de proposer un procédé et un système de gestion d'un service de renseignement téléphonique automatisé dans un réseau téléphonique public permettant d'introduire des requêtes vocales et qui soit tout à la fois économique pour l'opérateur, et simple à utiliser pour l'appelant.

Selon l'invention, ces buts sont atteints au moyen des éléments des revendications indépendantes, des variantes préférentielles étant par ailleurs indiquées dans les revendications dépendantes et dans la description.

En particulier, ces buts sont atteints au moyen d'un procédé de gestion d'un service de renseignement téléphonique automatisé dans un réseau téléphonique public, permettant à un appelant d'obtenir des renseignements sur l'abonné demandé, notamment son numéro de téléphone. L'identité de l'appelant est tout d'abord déterminée par le système de renseignement automatique. En identifiant réellement l'appelant (et pas seulement le raccordement téléphonique utilisé par ce dernier), il est possible dans une variante préférentielle d'utiliser des modèles de voix propres à cet appelant pour analyser ses paroles. Ces modèles de voix sont mémorisés dans le système de renseignement automatique pour chaque utilisateur, et de préférence améliorés et/ou complétés à chaque utilisation du système. Le système de renseignement automatique détermine également un profil d'appelant propre à l'appelant, mémorisé dans le système de renseignement et incluant des paramètres relatifs aux habitudes d'appels de l'appelant établis à partir d'appels précédents, par exemple une liste de numéros déjà demandés par l'appelant, ou une liste de localités dans lesquelles l'appelant demande souvent des numéros. Le système de reconnaissance de parole parvient à un taux de reconnaissance élevé grâce à l'utilisation de modèles de voix propres à l'appelant. Un profil des abonnés indiquant les caractéristiques des appelants requérant un abonné demandé est déterminé, et est mémorisé dans une banque de données. Les profils des abonnés sont complétés lors de l'utilisation du système par des informations tirées des requêtes des utilisateurs. En utilisant en outre des informations tirées du profil d'appelant et des profils des abonnés le système de renseignement automatique de l'invention arrive ainsi avec un taux de confiance élevé à déterminer l'identification du ou des abonnés demandés dans un annuaire général des abonnés au réseau téléphonique public, et à déterminer le numéro de téléphone ou d'autres renseignements au sujet de l'abonné demandé. L'annuaire général des abonnés utilisé contient la liste des abonnés par exemple dans un pays ou dans une région géographique couverte par l'opérateur du système, et contient pour chaque abonné des indications fiables relatives à son nom, son prénom, son adresse complète, éventuellement sa profession, etc... ces nombreux critères permettent de retrouver un abonné demandé avec un niveau de confiance accru même à partir d'indications très diverses, par exemple à partir de la profession et de la localité, etc.. L'annuaire des abonnés peut aussi être un annuaire de type pages jaunes, dans lequel les abonnés sont regroupés par profession ou domaine d'activité économique. Une connexion téléphonique peut ensuite être directement établie entre l'appelant et l'abonné ainsi identifié.

Dans une variante préférentielle de l'invention, le système de renseignement automatique mémorise en outre pour chaque appelant des modèles de langage, en plus des modèles de voix. Ces modèles de langage contiennent des informations sur la manière usuelle d'un abonné de requérir une information - est-ce que l'utilisateur va demander « Passez-moi Durand à Genève ! » ou plutôt « je voudrais s'il-vous-plaît parler à M. Durand, de Genève» ?- et permettent ainsi d'améliorer ainsi la compréhension sémantique et syntaxique de la commande vocale de l'appelant.

De manière préférentielle, le système de renseignement automatique utilise en outre des informations relatives à l'appel en cours, par exemple des informations relatives à l'emplacement géographique actuel de l'appelant. Il a en effet été constaté dans le cadre de cette invention que les numéros d'abonnés qui se trouvent géographiquement près de l'appelant sont plus souvent demandés. Toutefois, lorsque des annuaires sous forme papier sont disponibles, par exemple lorsque l'appel est effectué depuis une cabine téléphonique équipée d'annuaires papier, les numéros les plus souvent demandés sont ceux d'abonnés non présents dans l'annuaire. La connaissance de l'emplacement géographique de l'appelant permet donc de faciliter la compréhension des requêtes de l'appelant.

De manière préférentielle, le système de renseignement automatique comprend en outre un gestionnaire de dialogue interactif avec un synthétiseur de voix, de préférence multilingue, pour gérer un dialogue sous forme de questions-réponses entre le système de renseignement et l'appelant. Le gestionnaire de dialogue utilise de préférence des paramètres d'abonnés propres à l'appelant et mémorisés dans le système ; ces paramètres incluent par exemple la langue préférentielle de l'utilisateur. Cette particularité permet à un utilisateur de dialoguer dans sa langue préférée avec le système de renseignement automatique, quel que soit son emplacement géographique momentané. Les paramètres d'abonnés peuvent également comporter des indications relatives au type de questions posées par le système - qui ne seront par exemple pas nécessairement les mêmes pour un utilisateur novice que pour un appelant plus expérimenté -, le choix de la voix générée par le synthétiseur de parole, etc..

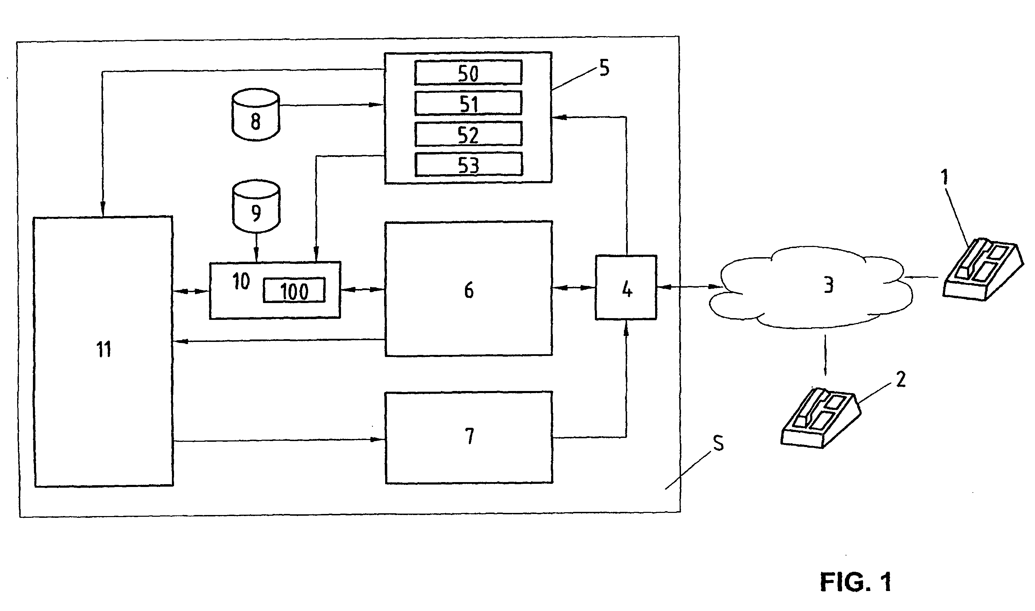

L'invention sera mieux comprise à l'aide de la description donnée à titre d'exemple et illustrée par la figure unique annexée qui montre un schéma-bloc d'un système selon l'invention.

La figure illustre de manière schématique un système dans lequel un abonné appelant 1 désire établir une connexion téléphonique avec un abonné demandé 2 à travers un réseau téléphonique public commuté 3, en utilisant le système de renseignement automatique S de l'invention. Le système de renseignement automatique S comprend des moyens de connexion 4 avec le réseau téléphonique public, par exemple un modem ou un routeur. De préférence les moyens de connexion 4 permettent un raccordement à un réseau numérique 4, par exemple à un réseau RNIS ou à un réseau radiomobile de type GSM, qui permet de déterminer le numéro de téléphone de l'appelant 1 et donc son emplacement géographique approximatif. L'appelant 1 est équipé d'un dispositif d'équipement terminal de type téléphone fixe ou mobile ou d'un ordinateur personnel par exemple.

Le système de renseignement automatique S comprend en outre des moyens de traitement informatique 5 pour déterminer l'identité de l'appelant. Les moyens 5 sont prévus de manière à réellement déterminer l'identité de l'appelant (et pas seulement l'identification du raccordement téléphonique utilisé par ce dernier). L'identification de l'appelant peut être effectuée de différentes manières. Dans le cas où l'appelant 1 est muni d'un téléphone mobile, par exemple d'un téléphone cellulaire de type GSM, cette identification d'appelant est par exemple effectuée au moyen d'un module d'identification abonné, par exemple d'une carte SIM (Subscriber Identification Module), insérée dans le téléphone mobile de l'appelant avant son raccordement au réseau radiomobile. Des méthodes d'identification d'abonnés au moyen de cartes à puce ont également été proposées pour d'autres systèmes de téléphonie mobile ou fixe. Dans une variante, l'abonné est identifié au moyen d'une identification d'appelant introduite par ce dernier, soit vocalement soit sur le clavier de son dispositif d'équipement terminal. L'identification d'appelant peut par exemple être constituée par le nom, le numéro de téléphone, le numéro de sécurité sociale, etc de l'appelant, ces données pouvant soit être tapées sur un clavier ou données oralement. Un numéro d'identification personnel (NIP) peut aussi être introduit sur le clavier pour valider l'identification d'appelant introduite. L'appelant peut également accéder au service de renseignement au moyen d'un raccordement universel, non lié à un poste, connu sous le nom de « Personal Number » ou « One Number », ou au travers d'un assistant de communication personnel ; dans ce cas, ce service fournit l'identification d'appelant au système de renseignement S de l'invention. Dans une autre variante, l'abonné est identifié au moyen d'une méthode d'identification d'appelant par la voix, cette solution étant de préférence combinée avec une identification préalable du raccordement téléphonique utilisé, par exemple pour distinguer l'appelant parmi les membres d'une même famille ou parmi les employés d'une société susceptibles d'utiliser le même raccordement téléphonique.

Dans le cas où l'appelant ne peut pas être identifié, ou bien est identifié mais qu'aucun profil d'appelant et aucun modèle de voix n'est disponible dans le système, notamment lors de la première utilisation, un gestionnaire de dialogue 11 peut par exemple générer au moyen du synthétiseur vocal 7 une demande vocale d'inscription au système, l'inscription pouvant être soumise à une taxe optionnelle. Le synthétiseur vocal est de préférence multilingue. En cas d'inscription, ou lorsqu'aucune inscription n'est nécessaire, l'appelant est prié de fournir des indications concernant le ou les abonnés demandés, au moyen d'une requête orale indiquant par exemple le nom et la localité. Dans une variante, plusieurs indications distinctes peuvent aussi être données dans plusieurs requêtes successives. La requête peut aussi être une requête de type pages jaunes, et comprendre une indication d'une profession ou d'un service demandé dans une localité ou une région donnée. Le système de renseignement S vérifie dans la banque de donnée d'utilisateurs 8 si un modèle de voix est disponible pour l'appelant identifié. Si un modèle de voix est disponible, le (ou les) fichiers correspondants sont stockés dans la zone de mémoire 52 accessible par le système d'analyse de parole 6, par le gestionnaire de dialogue 11 et par le système informatique 10 pour analyser la voix de l'appelant. Lorsqu'aucun modèle de voix n'est trouvé, le gestionnaire de dialogue utilise une méthode d'analyse de parole indépendante de l'appelant pour analyser les requêtes orales reçues. De la même façon, le système S vérifie dans la banque de donnée d'utilisateurs 8 (ou dans une autre banque) si des paramètres d'utilisateur, un profil d'appelant et/ou un modèle de langage sont disponibles pour l'appelant identifié ; le cas échéant, ces informations sont respectivement copiées dans les fichiers 50, 51, et 53.

Les paramètres d'utilisateur stockés dans le fichier 50 incluent les préférences de l'abonné quant au dialogue établi avec le système S de l'invention, par exemple la langue préférée de l'appelant, le type de dialogue préféré (questions longues et précises, par exemple pour un utilisateur novice, ou questions courtes pour un utilisateur plus expérimenté) et/ou la voix générée par le synthétiseur de voix 7 dans le cas où plusieurs voix, par exemple une voix féminine et une voix masculine, sont proposées. Le fichier 50 peut également inclure des autorisations d'accès, par exemple dans le cas où différentes applications peuvent être accédées au moyen du système S et qu'il est prévu de limiter l'accès à certaines applications. Le fichier 50 peut en outre inclure d'autres préférences de l'utilisateur, par exemple un fanion indiquant si l'appelant préfère par défaut être automatiquement connecté avec l'abonné demandé ou s'il souhaite uniquement obtenir son numéro de téléphone, son origine géographique, son niveau de familiarité avec le système (débutant ou confirmé), son nombre d'utilisations du service (« heavy users »), son âge, son sexe, sa profession, sa qualité privée ou professionnelle, le segment de marché auquel il appartient, etc.. ainsi que toute indication permettant de lui offrir un service personnalisé et de faciliter la recherche de renseignements à partir de ses requêtes. Les préférences de l'utilisateur peuvent être définies de différentes manières, par exemple au moyen d'un service téléphonique spécial, d'un formulaire papier ou Internet d'inscription ou de gestion du système, ou à partir des choix effectués lors d'appels précédents de l'appelant.

Le profil d'appelant stocké dans le fichier 51 inclut des paramètres relatifs aux habitudes d'appels de l'appelant déterminées à partir d'appels précédents. Il a en effet été constaté dans le cadre de cette invention que les demandes de renseignements successives d'un utilisateur sont souvent corrélées ; de nombreux utilisateurs demandent ainsi plusieurs fois le numéro de téléphone du même abonné, ou les numéros de téléphone de membres de la même famille, ou d'abonnés habitant la même région. Les probabilités de tous les abonnés d'être recherchés par un utilisateur particulier ne sont donc pas égales ; le système utilise la connaissance des requêtes passées de l'appelant pour améliorer l'interprétation des nouvelles requêtes de cet appelant, notamment lorsque l'analyse de la parole de l'appelant ne fournit pas des niveaux de confiance très élevés, ou lorsque les requêtes de l'appelant comprises par le système S ne permettent pas d'identifier sans ambiguïté l'abonné demandé.

Les modèles de langage stockés dans le fichier 53 permettent d'améliorer encore l'analyse vocale des requêtes des appelants. Il est en effet probable qu'un appelant utilise souvent la même syntaxe pour demander une connexion. Par exemple, certains appelants réclameront vraissemblablement toujours simplement «Durand, à Genève ! » tandis que d'autres préféreront demander « Pouvez-vous me connecter à M. Durand, de Genève ? ». En connaissant la syntaxe des requêtes généralement adoptées par un appelant, le système d'analyse de parole 6 peut plus facilement comprendre ces requêtes, et notamment déterminer quels éléments de ces requêtes correspondent à des éléments d'information utiles, par exemple au nom ou à l'adresse de l'abonné demandé.

Le système S comprend en outre une banque de donnée 9 correspondant à un annuaire général des abonnés au réseau téléphonique public 3. Cette banque de donnée contient par exemple le nom, l'adresse, le ou les numéros de téléphone et de fax et éventuellement d'autres indications telles que la profession ou l'adresse e-mail d'un grand nombre d'abonnés, par exemple de tous les abonnés d'un pays ou auprès d'un opérateur de télécommunications. Cette banque de donnée contient de préférence au moins toutes les indications à disposition des services de renseignements téléphoniques conventionnels, et contient par exemple dans le cas d'un annuaire couvrant un pays comme la Suisse plusieurs millions d'entrées différentes, afin de pouvoir fournir pratiquement tous les renseignements téléphoniques pouvant être demandés par les utilisateurs. Cette banque de donnée est administrée par l'opérateur du système de renseignement automatique S et les utilisateurs n'ont donc pas besoin de gérer les données dans cette banque de donnée. Chaque utilisateur a accès à la même banque de donnée lorsqu'il accède au système S. La banque de donnée est de préférence stockée sur un support de stockage semi-permanent, par exemple sur un support magnétique de type disque dur ou sur un support optique ou magnético-optique, et chargée en totalité dans la mémoire vive des moyens de traitement informatiques 10, afin d'accélérer le traitement et la recherche dans cette banque de donnée.

Dans un mode de réalisation possible de l'invention, les enregistrements dans la banque de donnée 9 sont complétés lors de l'utilisation du système par des informations tirées des requêtes des utilisateurs. Par exemple, si un enregistrement correspond à un hôtel, il est probable qu'un nombre élevé de demandes de connexion proviennent de téléphones publics dans les halls de gare ou d'aéroport à proximité de la ville où se trouve cet hôtel. De même, la probabilité qu'une connexion au bulletin d'avalanche soit demandée depuis une station de montagne est sans doute plus élevée que depuis une ville de plaine. Dans de nombreux cas, il est donc possible de déterminer un profil des abonnés indiquant les caractéristiques des appelants demandant un abonné donné, et de mémoriser ce profil dans un champ approprié de la banque de donnée 9 pour faciliter l'analyse de demandes de connexion ultérieures avec cet abonné.

De préférence, le profil des abonnés dans la banque de donnée 9 contient en outre des indications sur la probabilité générale d'un abonné d'être demandé. Il a en effet été constaté que les numéros de certains abonnés sont beaucoup plus souvent demandés que d'autres. Par exemple, les numéros de certains services publics ou commerciaux peuvent être demandés plusieurs dizaines ou centaines de fois par jour, tandis que certains numéros ne sont jamais demandés. En outre, les numéros d'abonnés qui viennent de changer, et qui ne figurent par exemple pas encore dans les annuaires papier ou CD-ROMS, sont beaucoup plus souvent demandés que les numéros d'abonnés inchangés depuis de nombreuses années. Il est donc possible de déterminer et de mémoriser pour chaque abonné répertorié une indication de la probabilité d'être demandé.

Lorsque l'appelant 1 a été identifié par le système S, les requêtes orales de l'appelant sont analysées au moyen du système d'analyse de parole 6, en utilisant les modèles de parole 52 et les modèles de langage 53 de l'appelant. Un programme informatique de détermination de l'identification de l'abonné demandé, exécuté par des moyens de traitement informatique 10, détermine ensuite à quelle valeur possible du champ considéré dans l'annuaire 9 correspond le plus vraisemblablement une indication de la requête analysée par le système 6. Par exemple, s'il ressort de la suite logique des questions et de l'analyse syntaxique effectuée par le système d'analyse 6 au moyen du profil de langage de l'appelant qu'un élément de la requête correspond à la localité de l'abonné demandé, le programme détermine à quelle localité répertoriée dans l'annuaire 9 peut correspondre cette indication. Pour ce faire, le programme calcule, de préférence pour chaque valeur possible du champ considéré, la probabilité que la requête corresponde à cette valeur. Cette probabilité peut être déterminée par exemple à partir de la distance entre le phonème reçu et un phonème calculé à partir de la valeur du champ et du modèle de voix de l'appelant, ainsi qu'à partir du profil d'appelant 51, et de préférence de la connaissance de l'emplacement géographique momentané de l'appelant. Une localité très éloignée de celle où se trouve momentanément l'appelant, et avec laquelle l'appelant n'a jamais demandé de connexion, se verra par exemple attribuer une probabilité beaucoup plus faible qu'une localité proche qui a déjà été souvent demandée dans le passé par l'utilisateur. De préférence, la probabilité est en outre déterminée en utilisant le profil des abonnés de chaque abonné répertorié dans la banque de donnée 9.

Le programme exécuté par les moyens informatiques 10 détermine ainsi à quelle valeur possible du champ considéré dans l'annuaire 9 correspond le plus vraissemblablement l'indication de l'appelant analysée par le système 6. Le programme détermine en outre de préférence un facteur indiquant le taux de confiance de l'identification effectuée. Si ce taux de confiance est inférieur à un seuil prédéterminé mémorisé dans une zone de mémoire 100, le gestionnaire de dialogue 11 demande une confirmation à l'appelant - par exemple « Est-ce que la localité est bien Genève en Suisse ? ». Dans une variante, une confirmation est demandée dans tous les cas, quel que soit le taux de confiance obtenu. Lorsque le taux de confiance est inférieur à un autre seuil mémorisé dans une zone de mémoire 100, le gestionnaire de dialogue 11 demande de préférence des indications supplémentaires - par exemple « Je n'arrive pas à comprendre la requête, pouvez-vous répéter le nom de la localité plus distinctement ? ».

Lorsque la requête est comprise avec un taux de confiance suffisant, le programme détermine si à partir des différentes indications à disposition l'abonné demandé peut être identifié sans ambiguïtés, ou si d'autres indications de type différent sont nécessaires. Par exemple, si le programme dispose du nom de l'abonné et du nom de la localité, mais que plusieurs abonnés avec ce nom existent dans la localité considérée, le gestionnaire de dialogue demande par exemple soit le prénom ou la rue de l'abonné demandé. Si un abonné avec ce nom a déjà été demandé dans le passé, et se trouve donc dans l'historique des appels 51, le programme peut suggérer cet abonné.

Lorsque l'abonné demandé a pu être identifié dans l'annuaire 9 avec un niveau de confiance supérieur à un seuil prédéterminé, son numéro (ou d'autres renseignements demandés, par exemple son adresse) est communiqué oralement à l'appelant par le gestionnaire de dialogue 11. Il est aussi possible de communiquer une liste de renseignements, notamment dans le cas d'un appel de type pages jaunes, par exemple la liste des garagistes dans une localité donnée. L'appelant a alors de préférence la possibilité de se connecter directement avec cet abonné, par exemple en pressant une touche appropriée sur son équipement terminal, par exemple la touche 5, ou de préférence par une commande vocale. L'appelant peut aussi être directement connecté avec l'abonné demandé, par exemple si cette option a été introduite dans le fichier de paramètres d'abonnés 50. Dans le cas d'un appelant muni d'un téléphone mobile de type GSM ou UMTS par exemple, le renseignement demandé peut aussi être communiqué à l'appelant à l'aide d'un message alphanumérique court de type SMS (Short Message System) ou USSD (Unstructured Supplementary Service Data) ou d'un applet, cette variante permettant à l'appelant de mémoriser directement un renseignement demandé dans un répertoire personnel, par exemple dans la carte SIM de l'abonné, et de l'associer à une touche particulière ou à un choix de menu dans son combiné. Des applets peuvent aussi être utilisés notamment lorsque l'appelant appelle depuis un ordinateur personnel qui peut exécuter un programme particulier, par exemple un programme de gestion de répertoire local, à partir des renseignements obtenus. Le renseignement demandé peut aussi être stocké dans le répertoire personnel de l'abonné dans le cas d'un système d'assistant personnel, ou dans le cas d'un appel effectué par exemple depuis un ordinateur ou un dispositif programmable.

Lorsque l'abonné demandé a été identifié avec le niveau de confiance requis, il est possible d'améliorer et/ou de compléter le modèle de voix 52 et/ou le modèle de langage 53 de l'appelant avec les paramètres de la requête de ce dernier. De cette manière, les modèles de voix et de langage peuvent être continuellement améliorés lors de chaque utilisation du système, et être en outre constamment adaptés aux évolutions de la voix et du langage de l'appelant. Il est ainsi possible d'utiliser des modèles de voix et de langage indépendant de l'appelant pour les nouveaux utilisateurs, et de construire un modèle de voix et de langage qui s'améliore à chaque nouvelle utilisation du système par un appelant identifié. De la même façon, le profil d'appelant 51 peut être complété avec des paramètres tirés de cette demande de connexion; par exemple, lorsque le profil d'appelant contient un historique des abonnés demandés, l'identification du ou des abonnés trouvés est ajouté à cet historique. Dans la variante préférentielle évoquée dans laquelle la banque de donnée 9 contient un profil d'abonné avec des indications concernant la probabilité de chaque abonné d'être demandé, cette banque de donnée est également complétée avec des indications concernant l'appelant. Une taxe d'utilisation du service de renseignement, dépendant par exemple du type de renseignement fourni, peut ensuite être facturée à l'appelant et ajoutée au montant de sa prochaine facture téléphonique ou débitée d'un montant prépayé.

Lorsque l'abonné demandé ne peut pas être identifié vraisemblablement parce que la requête de l'appelant n'a pas été comprise, l'appel de l'utilisateur est de préférence dévié sur un service de renseignement conventionnel géré par des agents humains.

L'établissement d'une connexion téléphonique entre un utilisateur Pierre Dupont et un abonné demandé Mr. Jean Durand à Genève pourra par exemple prendre la forme suivante :

| **Système** | **Appelant** |
|---|---|
| | *Etablissement d'une connexion avec le système S (par exemple numéro d'appel 111)* |
| *Reconnaissance de l'appelant, détermination de son profil .* | |
| « Bonjour Pierre. Veuillez indiquer votre requête s'il vous plaît » | |
| | « Passez-moi s'il-vous-plaît M. Durand à Genève » |
| « Pouvez-vous répéter la localité ? » | |
| *Détermination de l'abonné demandé* | |
| | « Genève ! » |
| « Voulez-vous appeler M. Jean Durand à Genève ?» | |
| | « Oui ! » |
| « Le numéro de téléphone de l'abonné demandé est le 022 123 45 67, Pour vous connecter directement, dites Connecter.» | |
| | « Connectez-moi ! » |
| *Etablissement d'une connexion avec M. Jean Durand* | |

Il va de soi que ce dialogue n'est donné ici qu'à titre d'exemple, et que le gestionnaire de dialogue 11 pourra être programmé de façons fort différentes dans le cadre de cette invention, selon le niveau de convivialité désiré, la qualité des résultats fournis par le système d'analyse de voix 6 et le système de traitement 10, et selon les fonctionnalités apportées au système. Dans une variante très simple mais peu conviviale, les répliques du gestionnaire de dialogues 11 sont claires, par exemple « veuillez indiquer distinctement le nom de la localité puis le nom de l'abonné demandé » et attendent des réponses précises. Des modes de réalisation plus sophistiqués autorisent un dialogue davantage interactif et l'emploi d'un langage naturel. Il est aussi possible dans une variante de l'invention d'adapter les répliques générées en fonction des paramètres d'utilisateur 50 de l'appelant. En outre, le gestionnaire de dialogue 11 permet de préférence d'obtenir différents types de renseignements, par exemple le numéro de téléphone, de fax ou de e-mail, l'adresse, la profession, le numéro de code postal, etc.. à partir de différentes indications, par exemple le nom et la localité, la profession et la région, etc.. Les enregistrements dans l'annuaire peuvent de préférence être également classés par branches d'activité commerciale, à la manière des pages jaunes, de façon à permettre par exemple une recherche par branche et par région. Enfin, il est de préférence également possible de fournir plusieurs renseignements lors d'une seule connexion, par exemple le numéro de téléphone de tous les Durand de Genève, ou l'adresse de tous les dentistes de Berne.

Le système de l'invention peut également être intégré dans un assistant de communication personnel conventionnel, donnant accès à d'autres services que le service de renseignements. Dans ce cas, l'accès au service de renseignements peut être sélectionné au moyen d'une commande vocale ou d'une touche de sélection particulière sur le dispositif terminal de l'appelant.

La présente invention concerne aussi bien le procédé mis en oeuvre pour déterminer un numéro et établir une connexion que le système S nécessaire. La totalité du système S pouvant être mise en oeuvre dans un mode de réalisation préférentiel de l'invention au moyen d'un système informatique commandé par un programme d'ordinateur, la présente invention concerne également un tel système informatique, ainsi que les programmes informatiques de gestion du système S, notamment de gestion du système informatique 10 et du gestionnaire de dialogue 11, et les supports de données informatiques pour ces programmes.

## Revendications

1. Procédé de gestion d'un service de renseignement téléphonique automatisé dans un réseau téléphonique public (3), au cours duquel une requête d'un abonné appelant est reçue par l'intermédiaire d'une méthode de reconnaissance de parole et des informations pour un abonné demandé sont extraites d'une banque de données d'un annuaire générale des abonnés, cet annuaire contenant des données qui sont attribuées à chaque numéro d'abonnés du réseau téléphonique, et dont au moins une donnée est indiquée à l'abonné appelant par le service de renseignement téléphonique automatisé, **caractérisé en ce qu'**
un profil des abonnés est attribué aux abonnés du réseau téléphonique public et est mémorisé,
une connexion téléphonique est établie à travers ledit réseau téléphonique public (3) entre un appelant (1) et un système de renseignement automatique (S) et l'appelant (1) est identifié par ledit système de renseignement automatique (S),
un profil d'appelant (51) propre à l'appelant (1) est déterminé, ledit profil d'appelant incluant des paramètres relatifs aux habitudes d'appel de l'appelant déterminés à partir d'appels précédents,
au moins un abonné demandé est déterminé à partir d'une requête vocale de l'appelant (1), au moyen d'une méthode de reconnaissance de parole, dudit profil des abonnés, dudit profil d'appelant (51) ainsi que d'un annuaire général (9) des abonnés audit réseau téléphonique public (3),
au moins un renseignement relatif à l'abonné demandé (2) est déterminé à l'aide dudit annuaire général (9), et
le profil de l'abonné demandé est modifié par des informations formées à partir de la requête de l'appelant lors de l'utilisation du service de renseignement téléphonique automatisé.

2. Procédé selon la revendication précédente, **caractérisé par** une étape de détermination d'au moins un modèle de voix (52) propre à l'appelant (1), et en ce que la méthode de reconnaissance de parole utilise ledit modèle de voix (52) de l'appelant.

3. Procédé selon la revendication précédente, **caractérisé en ce que** ledit renseignement relatif à l'abonné demandé peut être communiqué audit appelant (1) au moyen d'un message généré par un synthétiseur vocal (7), d'un message alphanuméerique court ou d'un applet.

4. Procédé selon l'une des revendications précédentes, **caractérisé en ce que** la connexion entre l'appelant (1) et l'abonné demandé (2) est automatiquement établie dès que le renseignement relatif à l'abonné demandé a été déterminé.

5. Procédé selon l'une des revendications précédentes, **caractérisé en ce que** ladite détermination de l'identification de l'abonné demandé (2) est effectuée en déterminant l'emplacement géographique de l'appelant (1).

6. Procédé selon l'une des revendications précédentes, **caractérisé en ce que** ladite détermination de l'identification de l'abonné demandé (2) est effectuée à l'aide d'un profil des abonnés demandés, fournissant une indication de la probabilité de chaque abonné d'être demandé.

7. Procédé selon l'une des revendications précédentes, **caractérisé en ce que** ledit profil d'appelant (51) inclut des paramètres statistiques relatifs aux abonnés demandés précédemment par l'appelant (1).

8. Procédé selon la revendication précédente, **caractérisé en ce que** lesdits paramètres statistiques incluent une liste d'abonnés demandés précédemment par l'appelant (1).

9. Procédé selon l'une des revendications précédentes, **caractérisé en ce que** l'appelant (1) est demandé de confirmer l'identification de l'abonné demandé (2).

10. Procédé selon l'une des revendications précédentes, **caractérisé en ce que** des indications supplémentaires sont demandées à l'appelant (1) pour déterminer l'identification de l'abonné demandé (2) ou ladite confirmation de l'identification de l'abonné est demandée lorsque le taux de confiance d'identification de ladite méthode de reconnaissance de parole se trouve en dessous d'un seuil prédéterminé (100) ou n'est pas univoque.

11. Procédé selon l'une des revendications précédentes, **caractérisé en ce qu'**un gestionnaire de dialogue interactif (11) dans ledit système de renseignement automatique génère au moyen d'un synthétiseur vocal (7) des répliques vocales pour l'appelant (1).

12. Procédé selon l'une des revendications 2 à 11, **caractérisé en ce que** ledit modèle de voix (52) de l'appelant (1) est complété et/ou amélioré lorsque l'appelant est identifié.

13. Procédé selon la revendication précédente, **caractérisé en ce que** la détermination de l'identification de l'abonné demandé (2) est effectuée au moyen d'une méthode de reconnaissance de parole indépendant de l'appelant (1) lorsqu'aucun modèle de voix (52) n'est disponible pour cet appelant (1).

14. Procédé selon l'une des revendications précédentes, **caractérisé en ce que** ladite détermination de l'identification de l'abonné demandé au moyen d'une méthode de reconnaissance de parole est effectuée en utilisant un modèle de langage de l'appelant (53).

15. Procédé selon la revendication précédente, **caractérisé en ce que** ledit modèle de langage de l'appelant (53) est complété et/ou amélioré lorsque l'appelant est identifié.

16. Procédé selon la revendication précédente, **caractérisé en ce que** ladite requête vocale comprend au moins l'indication du nom, du prénom et de l'adresse de l'abonné demandé (2).

17. Procédé selon l'une des revendications précédentes, **caractérisé en ce que** ladite méthode de reconnaissance de parole détermine l'abonné demandé (2) en déterminant dans au moins un extrait dudit annuaire (9) la probabilité que chaque abonné soit demandé.

18. Procédé selon l'une des revendications précédentes, **caractérisé en ce que** l'appelant (1) est identifié dans ledit système de renseignement automatique (S) au moyen d'une identification d'appelant introduite par l'appelant.

19. Procédé selon l'une des revendications précédentes, **caractérisé en ce que** l'appelant (1) est identifié dans ledit système de renseignement automatique (S) au moyen d'une méthode de reconnaissance vocale d'abonné.

20. Procédé selon l'une des revendications précédentes, **caractérisé en ce que** l'appelant (1) est identifié dans ledit système de renseignement automatique (S) au moyen d'un module d'identification amovible introduit dans le dispositif d'équipement terminal de l'abonné et contenant une identification d'abonné.

21. Système de gestion d'un service de renseignement automatique (S) dans un réseau téléphonique public (3), lequel système contient pour la connexion avec ledit réseau téléphonique public (3), des moyens pour l'identification d'un appelant, une banque de données (9) incluant un annuaire général des abonnés audit réseau téléphonique public (3), des moyens pour la reconnaissance de parole d'une requête d'un appelant pour des informations concernant un abonné du réseau téléphonique, une banque de données (9) qui contient un profil d'appelant attribué à l'appelant, incluant pour chaque appelant (1) des paramètres relatifs aux habitudes d'appels déterminées à partir d'appels précédents effectués par cet appelant (1), ainsi qu'un moyen de détermination de l'identification de l'abonné demandé (2) à partir d'un message vocal d'un appelant (1), **caractérisé en ce que**,
le système comprend une banque de données (9), où les profils des abonnés dudit réseau téléphonique public sont mémorisés,
le système comprend des moyens qui déterminent au moins une information d'un abonné dudit réseau téléphonique au moyen d'une méthode de reconnaissance de parole dudit profil des abonnés, dudit profil d'appelant (51) ainsi que d'un annuaire général (9) des abonnés audit réseau téléphonique public (3),
le système comprend des moyens pour la détermination de l'identification de l'abonné demandé (2) à partir d'un message vocal d'un appelant (1), dudit profil des abonnés, dudit profil d'appelant (51) ainsi que dudit annuaire général (9) des abonnés, lesdits moyens permettant en outre de déterminer au moins un renseignement relatif à l'abonné demandé au moyen dudit annuaire (9),
le système comprend des moyens pour indiquer les informations désirées à l'appelant, et
le système comprend des moyens pour la modification du profil des abonnés de l'abonné recherché selon la requête de l'appelant.

22. Système selon la revendication précédente, **caractérisé par** une liste (8) de modèles de voix (52), incluant pour chaque appelant un ou plusieurs modèles de voix, et en ce que ledit moyen de reconnaissance de parole utilise ledit modèle de voix (52) de l'appelant (1).

23. Système selon la revendication précédente, **caractérisé par** des moyens (4) d'établissement d'une connexion entre l'appelant (1) et l'abonné demandé (2).

24. Système selon l'une des revendications 21 à 23, **caractérisé par** un synthétiseur vocal (7) pour communiquer oralement ledit renseignement relatif à l'abonné demandé audit appelant (1).

25. Système selon l'une des revendications 21 à 24, **caractérisé en ce que** lesdits moyens de connexion (4) avec ledit réseau téléphonique public (3) comprennent une connexion numérique permettant de déterminer le numéro de téléphone de l'appelant (1).

26. Système selon l'une des revendications 21 à 25, **caractérisé en ce que** lesdits profils d'appelant (51) incluent des paramètres statistiques relatifs aux abonnés demandés précédemment par chaque abonné.

27. Système selon l'une des revendications 21 à 26, **caractérisé en ce que** lesdits paramètres statistiques incluent une liste d'abonnés demandés précédemment par chaque abonné.

28. Système selon l'une des revendications 21 à 27, **caractérisé par** un gestionnaire de dialogue (11) pour établir un dialogue interactif entre ledit système (s) et ledit appelant (1).

29. Système selon l'une des revendications 21 à 28, **caractérisé par** une une banque de donnée (9) incluant des profils de langage (53) d'appelants, incluant pour chaque appelant un modèle sémantique ou syntaxique.

30. Système selon l'une des revendications 21 à 29, **caractérisé en ce qu'**il inclut des moyens de reconnaissance vocale d'abonnés (5).

31. Système selon l'une des revendications 21 à 30, **caractérisé par** des moyens pour communiquer ledit renseignement relatif à l'abonné demandé à l'appelant au moyen d'un message alphanumérique court ou d'un applet.

32. Système selon l'une des revendications 21 à 31, **caractérisé par** ledit profil des abonnés demandés, fournissant une indication de la probabilité de chaque abonné d'être demandé par l'appelant.

## Patentansprüche

1. Verfahren zur Durchführung eines automatisierten telefonischen Auskunftsdienstes in einem öffentlich geschalteten Telefonnetz (3), bei welchem eine Anfrage eines anrufenden Abonnenten mittels Spracherkennungsverfahren erhalten wird und Informationen über einen gewünschten Abonnenten aus einer Datenbank eines allgemeinen Jahrbuches der Abonnenten extrahiert wird, wobei dieses Jahrbuch Datenbankeinträge umfasst, die einer jeweiligen Abonnentennummer des Telefonnetzes zugewiesen sind, und aus welchen mindestens ein Datenbankeintrag dem anrufenden Abonnenten durch den automatisierten telefonischen Auskunftsdienst angegeben wird, **dadurch gekennzeichnet,**
**dass** ein Abonnentenprofil den Abonnenten des öffentlichgeschalteten Telefonnetzes zugewiesen wird und abgespeichert wird,
**dass** eine Telefonverbindung über das genannte öffentlich geschaltete Telefonnetz (3) zwischen einem Anrufenden (1) und einem automatisierten Auskunftssystem (S) erstellt wird und der Anrufende (1) durch das genannte automatisierte Auskunftssystem (S) identifiziert wird,
**dass** ein dem Anrufenden (1) entsprechendes Anrufsprofil (51) bestimmt wird, welches Anrufsprofil Parameter bezüglich den Anrufsgewohnheiten des Anrufenden umfasst, welche basierend auf vorgängigen Anrufen bestimmt wurden,
**dass** basierend auf einer mündlichen Anfrage des Anrufenden (1) mindestens ein gewünschter Abonnent mittels Spracherkennungsverfahren, mittels des genannten Abonnentenprofils, mittels des genannten Anruferprofils (51), sowie mittels einem allgemeinen Jahrbuches (9) der Abonnenten des öffentlich geschalteten Telefonnetzes (3) bestimmt wird,
**dass** mindestens eine Auskunft bezüglich des gewünschten Abonnenten (2) basierend auf dem genannten allgemeinen Jahrbuch (9) bestimmt wird, und
**dass** das gewünschte Abonnentenprofil durch Informationen modifiziert wird, welche Informationen basierend auf der Anfrage des Anrufenden während der Benutzung des automatisierten telefonischen Auskunftsdienstes erhalten wurden.

2. Verfahren nach Anspruch 1, **dadurch gekennzeichnet, dass** das Verfahren die Bestimmung mindestens eines Sprachmusters (52) eines jeweiligen Anrufenden (1) umfasst, wobei das Spracherkennungsverfahren das genannte Sprachmuster (52) des Anrufenden benutzt.

3. Verfahren nach einem der Ansprüche 1 oder 2, **dadurch gekennzeichnet, dass** die genannte Auskunft bezüglich eines gewünschten Abonnenten dem Anrufenden (1) mittels einem Spracherzeugungsmodul (7), einer kurzen alphanumerischen Message oder einem Applet mitgeteilt wird.

4. Verfahren nach einem der Ansprüche 1 bis 3, **dadurch gekennzeichnet, dass** die Verbindung zwischen dem Anrufenden (1) und dem gewünschten Abonnenten (2) automatisch erstellt wird, sobald die Auskunft bezüglich des gewünschten Abonnenten bestimmt wurde.

5. Verfahren nach einem der Ansprüche 1 bis 4, **dadurch gekennzeichnet, dass** die genannte Bestimmung der Identifikation des gewünschten Abonnenten (2) basierend auf der Bestimmung des geografischen Ortes des Anrufenden (1) erreicht wird.

6. Verfahren nach einem der Ansprüche 1 bis 5, **dadurch gekennzeichnet, dass** die genannte Bestimmung der Identifikation des gewünschten Abonnenten (2) basierend auf ein Profil des gewünschten Abonnenten erreicht wird, wobei das Profil des gewünschten Abonnenten Angaben über die Wahrscheinlichkeit das der jeweilige Abonnent verlangt wird umfasst.

7. Verfahren nach einem der Ansprüche 1 bis 6, **dadurch gekennzeichnet, dass** das genannte Anruferprofil (51) statistische Parameter bezüglich früher gewünschter Abonnenten durch den Anrufenden (1) umfasst.

8. Verfahren nach Anspruch 7, **dadurch gekennzeichnet, dass** die genannten statistischen Parameter eine Liste der durch den Anrufenden (1) früher gewünschten Abonnenten umfasst.

9. Verfahren nach einem der Ansprüche 1 bis 8, **dadurch gekennzeichnet, dass** der Anrufende (1) aufgefordert wird, die Identifikation des gewünschten Abonnenten (2) zu bestätigen.

10. Verfahren nach einem der Ansprüche 1 bis 9, **dadurch gekennzeichnet, dass** zusätzliche Angaben vom Anrufenden (1) verlangt werden, um die Identifikation des gewünschten Abonnenten (2) zu bestimmen oder die genannte Bestätigung der Identifikation des Abonnenten wird verlangt, wenn die Bestimmungswahrscheinlichkeit der Identifikation durch das genannte Spracherkennungsverfahren unter einer vorbestimmten Schwelle (100) befindet oder die Identifikation nicht eindeutig ist.

11. Verfahren nach einem der Ansprüche 1 bis 10, **dadurch gekennzeichnet, dass** ein interaktiver Frage- Antwortdialog (11) durch das genannte automatische Auskunftssystem für den Anrufenden (1) generiert wird, wobei der interaktive Dialog (11) mittels durch ein Sprachsynthetisiermodul (7) erzeugte Sprachantworten generiert wird.

12. Verfahren nach einem der Ansprüche 2 bis 11, **dadurch gekennzeichnet, dass** das genannte Sprachmuster (52) des Anrufenden (1) vervollständigt oder verbessert wird, wenn der Anrufende identifiziert ist.

13. Verfahren nach einem der Ansprüche 1 bis 12, **dadurch gekennzeichnet, dass** die Bestimmung der Identifikation des gewünschten Abonnenten (2) mittels einem Spracherkennungsverfahren durchgeführt wird, wobei das Spracherkennungsverfahren unabhängig vom Anrufenden (1) ist, wenn kein Sprachmuster (52) für diesen Anrufenden (1) verfügbar ist.

14. Verfahren nach einem der Ansprüche 1 bis 13, **dadurch gekennzeichnet, dass** die genannte Bestimmung der Identifikation des gewünschten Abonnenten mittels einem Spracherkennungsverfahren durchgeführt wird, wobei das Spracherkennungsverfahren ein Stimmmuster des Anrufenden (53) verwendet.

15. Verfahren nach einem der Ansprüche 1 bis 14, **dadurch gekennzeichnet, dass** das genannte Stimmmuster des Anrufenden (53) vervollständigt und/oder verbessert wird, wenn der Anrufende identifiziert ist.

16. Verfahren nach einem der Ansprüche 1 bis 15, **dadurch gekennzeichnet, dass** die genannte Sprachanfrage mindestens Angaben zum Namen, zum Vornamen und der Adresse des gewünschten Abonnenten (2) umfasst.

17. Verfahren nach einem der Ansprüche 1 bis 16, **dadurch gekennzeichnet, dass** das genannte Spracherkennungsverfahren den gewünschten Abonnenten (2) dadurch bestimmt, dass für mindestens einen Datenbankeintrag des genannten Jahrbuches (9) die Wahrscheinlichkeit, dass der jeweilige Abonnent verlangt wird, bestimmt wird.

18. Verfahren nach einem der Ansprüche 1 bis 17, **dadurch gekennzeichnet, dass** der Anrufende (1) durch das genannte automatische Auskunftssystem (S) mittels einer Identifikation des Anrufenden identifiziert wird, wobei die Identifikation des Anrufenden durch den Anrufenden eingeleitet wird.

19. Verfahren nach einem der Ansprüche 1 bis 18, **dadurch gekennzeichnet, dass** der Anrufende (1) durch das genannte automatische Auskunftssystem (S) mittels einem Spracherkennungsverfahren des Abonnenten identifiziert wird.

20. Verfahren nach einem der Ansprüche 1 bis 19, **dadurch gekennzeichnet, dass** der Anrufende (1) durch das genannte automatische Auskunftssystem (S) mittels einem auswechselbaren Identifikationsmodul identifiziert wird, wobei das auswechselbare Identifikationsmodul in die Telekommunikationsvorrichtung des Abonnenten eingeführt ist und wobei das Identifikationsmodul eine Identifikation des Abonnenten umfasst.

21. System zur Durchführung eines automatischen Auskunftsdienstes (S) in einem öffentlich geschalteten Telefonnetz (3), welches System Mittel für die Verbindung mit dem genannten öffentlich geschalteten Telefonnetz (3), Mittel für die Identifikation eines Anrufenden, eine Datenbank (9) mit einem allgemeinem Jahrbuch der Abonnenten des genannten öffentlich geschalteten Telefonnetzes (3), Mittel zur Spracherkennung einer Anfrage bezüglich Informationen betreffend eines Abonnenten des Telefonnetzes durch einen Anrufenden, eine Datenbank (9), die ein dem Anrufer zugewiesenes Anruferprofil umfasst, wobei das Anruferprofil für jeden Anrufenden (1) Parameter bezüglich Anrufgewohnheiten umfasst, welche Anrufgewohnheiten basierend auf vorgängig durch diesen Anrufenden (1) getätigten Anrufen bestimmt sind, sowie Mittel zur Bestimmung der Identifikation des gewünschten Abonnenten (2) basierend auf einer gesprochenen Anfrage des Anrufenden (1), **dadurch gekennzeichnet,**
**dass** das System eine Datenbank (9) umfasst, wo die Profile der Abonnenten des genannten öffentlich geschalteten Telefonnetzes abgespeichert sind,
**dass** das System Mittel umfasst, die mindestens eine Information eines Abonnenten des genannten Telefonnetzes mittels einem Spracherkennungsverfahren basierend auf dem genannten Abonnentenprofil, dem genannten Anruferprofil (51), sowie dem allgemeinen Jahrbuch (9) der Abonnenten des öffentlich geschalteten Telefonnetzes (3) bestimmt, dass das System Mittel umfasst zur Bestimmung der Identifikation des gewünschten Abonnenten (2) basierend auf einer gesprochenen Anfrage des Anrufenden (1), dem Profil der Abonnenten, dem Profil des Anrufenden (51) sowie dem genannten allgemeinen Jahrbuch (9) der Abonnenten, wobei die Mittel ausserdem mindestens eine Auskunft bezüglich des gewünschten Abonnenten basierend auf dem genannten Jahrbuch (9) zu bestimmen erlauben, dass das System Mittel zum Anzeigen der gewünschten Information für den Anrufenden umfasst, und
**dass** das System Mittel zur Modifikation des Profils der Abonnenten und des gesuchten Abonnenten nach der Anfrage durch den Anrufenden umfasst.

22. System nach Anspruch 21, **dadurch gekennzeichnet, dass** das System eine Liste (8) mit Sprachmuster (52) umfasst, wobei jedem Anrufenden ein oder mehrere Sprach Muster zugeordnet sind und die genannten Spracherkennungsmittel die genannten Sprachmuster (52) des Anrufenden (1) verwenden.

23. System nach Anspruch 21 oder 22, **dadurch gekennzeichnet, dass** das System Mittel (4) zur Errichtung einer Verbindung zwischen dem Anrufenden (1) und dem gewünschten Abonnenten (2) umfasst.

24. System nach einem der Ansprüche 21 bis 23, **dadurch gekennzeichnet, dass** das System ein Sprachsynthetisiermodul (7) zum Sprachlichenkommunizieren der genannten Auskunft bezüglich des gewünschten Abonnenten durch den genannten Anrufenden (1) umfasst.

25. System nach einem der Ansprüche 21 bis 24, **dadurch gekennzeichnet, dass** die genannten Verbindungsmittel (4) mit den genannten öffentlich geschalteten Telefonnetz (3) eine nummerische Verbindung umfassen, die eine Bestimmung der Telefonnummer des Anrufenden (1) erlaubet.

26. System nach einem der Ansprüche 21 bis 25, **dadurch gekennzeichnet, dass** die genannten Anruferprofile (51) statistische Parameter bezüglich der durch den jeweiligen Abonnenten vorgängig gewünschten Abonnenten umfasst.

27. System nach Anspruch 26, **dadurch gekennzeichnet, dass** die genannten statistischen Parameter eine Liste der vorgängigen durch den jeweiligen Abonnenten gewünschten Abonnenten umfasst.

28. System nach einem der Ansprüche 21 bis 27, **dadurch gekennzeichnet, dass** das System Mittel zur Generierung eines interaktiven Dialogs durch einen Frage Antwort Dialog (11) zwischen dem genannten System (S) und dem genannten Anrufenden (1) umfasst.

29. System gemäss einem der Ansprüche 21 bis 28, **dadurch gekennzeichnet, dass** das System eine Datenbank (9) umfasst, welche Stimmmuster (53) der Anrufenden umfasst, wobei jedem Anrufenden ein semantisches oder syntaktisches Stimmmuster zugeordnet ist.

30. System nach einem der Ansprüche 21 bis 29, **dadurch gekennzeichnet, dass** das System Mittel zur Stimmerkennung der Abonnenten (5) umfasst.

31. System nach einem der Ansprüche 21 bis 30, **dadurch gekennzeichnet, dass** das System Mittel zur Sprachlichenkommunizierung der genannten Auskunft bezüglich des gewünschten Abonnenten für den Anrufenden, oder Mittel zur Übermittlung einer alphanumerischen Kurznachricht oder eines Applets umfasst.

32. System nach einem der Ansprüche 21 bis 31, **dadurch gekennzeichnet, dass** das genannte Profil der gewünschten Abonnenten einen Hinweis über die Wahrscheinlichkeit, dass der jeweilige Abonnent durch einen Anrufenden gewünscht wird umfasst.

## Claims

1. Method for managing an automatic telephone information service in a public telephone network (3) in the course of which a request from a calling subscriber is received via a speech recognition method and information for a requested subscriber is extracted from a database of a general directory of subscribers, this directory containing data which are assigned to each number of subscribers of the telephone network, and of which at least one piece of information is indicated to the calling subscriber by the automatic telephone information service, **characterised in that**
a profile of subscribers is assigned to subscribers of the public telephone network and is stored,
a telephone connection is established through the said public telephone network (3) between a caller (1) and an automatic information system (S) and the caller (1) is identified through the said automatic information system (S),
a caller profile (51) specific to the caller (1) is determined, the said caller profile including parameters relating to the calling habits of the caller determined on the basis of previous calls,
at least one requested subscriber is determined from a vocal request from the caller (1), by means of a speech recognition method, from the said profile of subscribers, from the said calling profile (51) as well as from a general directory (9) of subscribers to the said public telephone network (3),
at least one piece of information relating to the requested subscriber (2) is determined with the aid of the said general directory (9), and
the profile for the requested subscriber is modified through information created from the request of the caller during use of the automatic telephone information service.

2. Method according to the preceding claim, **characterised by** a step of determination of at least one voice pattern (52) specific to the caller (1) and in that the speech recognition method uses the said voice pattern (52) of the caller.

3. Method according to the preceding claim, **characterised in that** the said information relating to the requested subscriber can be communicated to the said caller (1) by means of a message generated by a speech synthesizer (7), a short alphanumerical message or an applet.

4. Method according to one of the preceding claims, **characterised in that** the connection between the caller (1) and the requested subscriber (2) is established automatically as soon as the information relating to the requested subscriber has been determined.

5. Method according to one of the preceding claims, **characterised in that** the said determination of the identification of the requested subscriber (2) is carried out by determining the geographic site of the caller (1).

6. Method according to one of the preceding claims, **characterised in that** the said determination of the identification of the requested subscriber (2) is carried out with the aid of a profile of requested subscribers providing an indication of the probability of each subscriber to be requested.

7. Method according to one of the preceding claims, **characterised in that** the said caller profile (51) includes statistical parameters relating to subscribers requested previously by the caller (1).

8. Method according to the preceding claim, **characterised in that** the said parameters include a list of subscribers previously requested by the caller (1).

9. Method according to one of the preceding claims, **characterised in that** the caller (1) is asked to confirm the identification of the requested subscriber (2).

10. Method according to one of the preceding claims, **characterised in that** supplementary indications are requested from the caller (1) to determine the identification of the requested subscriber (1) of the said confirmation of the identification of the subscriber is requested when the rate of reliability of identification of the said speech recognition method is below a predetermined threshold (100) or is not unequivocal.

11. Method according to one of the preceding claims, **characterised in that** an interactive dialogue manager (11) in the said automatic information system generates at least one voice synthesizer (7) of vocal replies for the caller (1).

12. Method according to one of the claims 2 to 11, **characterised in that** the said voice pattern (52) of the caller (1) is supplemented and/or improved when the caller is identified.

13. Method according to the preceding claim, **characterised in that** determination of the identification of the requested subscriber (2) is carried out by means of an independent speech recognition method of the caller (1) when no voice pattern (52) is available for this caller (1).

14. Method according to one of the preceding claims, **characterised in that** the said determination of the identification of the requested subscriber by means of a speech recognition method is carried out by using a language pattern of the caller (53).

15. Method according to the preceding claim, **characterised in that** the said language pattern of the caller (53) is supplemented and/or improved when the caller is identified.

16. Method according to the preceding claim, **characterised in that** the said vocal request comprises at least the indication of surname, of first name and of the address of the requested subscriber (2).

17. Method according to one of the preceding claims, **characterised in that** the said speech recognition method determines the requested subscriber (2) by determining in at least one extract from the said directory (9) the probability that each subscriber is requested.

18. Method according to one of the preceding claims, **characterised in that** the caller (1) is identified in the said automatic information system (S) by means of an identification of the caller introduced by the caller.

19. Method according to one of the preceding claims, **characterised in that** the caller (1) is identified in the said automatic information system (S) by means of a subscriber speech recognition method.

20. Method according to one of the preceding claims, **characterised in that** the caller (1) is identified in the said automatic information system (S) by means of a removable identification module inserted into the terminal equipment device of the subscriber and containing an identification of the subscriber.

21. Managing system for an automatic information service (S) in a public telephone network (3), which system contains for the connection with the said public telephone network (3) means of identification of a caller, a database (9) including a general directory of subscribers to the said public telephone network (3), means for speech recognition of a request of a caller for information concerning a subscriber to the telephone network, a database (9) which contains a profile of the caller assigned to the caller, including for each caller (1) parameters relating to calling habits determined from previous calls carried out by this caller (1), as well as a means of determination of the identification of the requested subscriber (2) starting from a vocal message of a caller (1), **characterised in that**
the system comprises a database (9) where the profiles of the subscribers to the said public telephone network are stored,
the system comprises means which determine at least one piece of information for a subscriber of the said telephone network by means of a speech recognition method for the said profile of subscribers, the caller profile (51) as well as a general directory (9) of subscribers to the said public telephone network (3),
the system comprises means for determination of the identification of the requested subscriber (2) from a vocal message of a caller (1), from the said profile of subscribers, from the said caller profile (51) as well as from the said general directory (9) of subscribers, the said means allowing moreover determination of at least one piece of information relating to the requested subscriber by means of the said directory (9),
the system comprises means for indicating the desired information to the caller, and
the system comprises means for modification of the profile of subscribers for the subscriber sought according to the request of the caller.

22. System according to the preceding claim, **characterised by** a list (8) of voice patterns (52), including for each caller one or more voice patterns, and in that the said speech recognition means use the said voice pattern (52) of the caller (1).

23. System according to the preceding claim, **characterised by** means (4) for establishing a connection between the caller (1) and the requested subscriber (2).

24. System according to one of the claims 21 to 23, **characterised by** a speech synthesizer (7) for communicating orally to the said caller (1) the said information relating to the requested subscriber.

25. System according to one of the claims 21 to 24, **characterised in that** the said means of connection (4) with the said public telephone network comprise a digital connection allowing determination of the telephone number of the caller (1).

26. System according to one of the claims 21 to 25, **characterised in that** the said caller profiles (51) include statistical parameters relating to subscribers previously requested by each subscriber.

27. System according to one of the claims 21 to 26 <sic. according to claim 26>, **characterised in that** the said statistical parameters include a list of subscribers previously requested by each subscriber.

28. System according to one of the claims 21 to 27, **characterised by** a dialogue manager (11) for establishing an interactive dialogue between the said system (s) and the said caller (1).

29. System according to one of the claims 21 to 28, **characterised by** a database (9) including language profiles (53) of callers, including a semantic or syntax model for each caller.

30. System according to one of the claims 21 to 29, **characterised in that** it includes means of vocal recognition of subscribers (5).

31. System according to one of the claims 21 to 30, **characterised by** means of communicating the said information relating to a requested subscriber to the caller by means of a short alphanumerical message or an applet.

32. System according to one of the claims 21 to 31, **characterised by** the said profile of requested subscribers, providing an indication of the probability for each subscriber to be requested by the caller.
